# EUROPÄISCHE PATENTSCHRIFT

(11) **EP 0 921 379 B1**
(45) Veröffentlichungstag und Bekanntmachung des Hinweises auf die Patenterteilung: **14.04.2004**
(21) Anmeldenummer: 98121940.5
(22) Anmeldetag: 19.11.1998
(51) Int. Cl.: G01G 19/08

(54) **Wägeeinrichtung für Fahrzeugaufbauten mit beweglichem Wiegestab**
Weighing device for vehicle bodies with a movable load cell rod
Dispositif de pesage pour carrosseries de véhicules avec cellule de charge mobile

(30) Priorität: 05.12.1997 DE 19753912
(43) Veröffentlichungstag der Anmeldung: 09.06.1999
(73) Patentinhaber: Pfreundt GmbH, 46354 Südlohn (DE)
(72) Erfinder: Dankelmann, Georg, 48691 Vreden (DE); Wissing, Ludger, 48712 Gescher (DE)
(74) Vertreter: Habbel, Ludwig (Lutz), Dipl.-Ing.

(56) Entgegenhaltungen:
- DE-U- 29 610 550
- DE-U- 29 622 189
- US-A- 3 390 575
- US-A- 3 857 452

## Beschreibung

Die Erfindung betrifft eine Wägeeinrichtung nach dem Oberbegriff des Anspruches 1.

Eine derartige Wägeeinrichtung ist aus der DE 296 10 550 U1 bekannt. Dabei ist das Druckübertragungsbauteil axial auf dem Wiegestab beweglich gelagert.

Aus der US 4 095 660 ist eine Wägeeinrichtung bekannt, bei der das Druckübertragungsbauteil die Kräfte nicht an einer Stelle, sondern an zwei voneinander beabstandeten Stellen in den Wiegestab einleitet. Die Lagerung des Wiegestabes sowohl gegenüber dem Fahrzeugrahmen als auch gegenüber dem Druckübertragungsbauteil soll jeweils eine Längsbeweglichkeit des Wiegestabes in seiner Axialrichtung ermöglichen, so daß der Wiegestab sich sowohl gegenüber dem Fahrzeugrahmen als auch gegenüber dem Druckübertragungsbauteil verschieben kann.

Durch Bodenunebenheiten und ähnliche Einflüsse kommt es in der Praxis zu Verwindungen des Fahrzeugrahmens, die sich auf den Fahrzeugaufbau übertragen können und / oder zu Relativbewegungen dieser beiden Fahrzeugbauteile führen können. Wenn Wiegeeinrichtungen zur Ermittlung der Nutzlast zwischen dem Fahrzeugaufbau und dem Fahrzeugrahmen angeordnet sind, können die Verwindungen dazu führen, daß die Stelle, an dem die zu messende Kraft in den Wiegestab eingeleitet wird, in Längsrichtung des Wiegestabes wandert. Die Wiegestäbe sind üblicherweise für eine bestimmte Stelle der Krafteinleitung ausgelegt, so daß derartige Veränderungen der Einleitungsstelle zu Ungenauigkeiten der Wiegung führen können.

Der Erfindung liegt die Aufgabe zugrunde, eine gattungsgemäße Wägeeinrichtung dahingehend zu verbessern, daß möglichst genaue Wiegeergebnisse erzielt werden.

Diese der Erfindung zugrundeliegende Aufgabe wird durch eine Wägeeinrichtung mit den Merkmalen des Anspruches 1 gelöst.

Die Erfindung schlägt mit anderen Worten vor, einerseits festzulegen, wo ein Druckübertragungsbauteil an den Wiegestab anschließt. Zu diesem Zweck ist eine Art Verzahnung vorgesehen, die durch entsprechende und miteinander zusammenwirkende Vorsprünge bzw. Ausnehmungen des Wiegestabes einerseits und des Druckübertragungsbauteiles andererseits geschaffen wird. Als zweite Maßnahme schlägt die Erfindung vor, den Wiegestab in seiner Längsrichtung beweglich zu lagern, so daß Verwindungen entweder innerhalb des Fahrzeugrahmens oder innerhalb des Fahrzeugaufbaues oder Relativbewegungen zwischen dem Fahrzeugaufbau und dem Fahrzeugrahmen nicht zu Verspannungen des Wiegestabes führen. Dadurch ist ausgeschlossen, daß derartige Verspannungen zusätzliche Kräfte in die Sensoranordnung des Wiegestabes einleiten können, die sich mit den zu ermittelnden Gewichtskräften überlagern und so das Meßergebnis verfälschen könnten.

Vorteilhaft können die beiden Enden des Wiegestabes in Aufnahmetaschen geführt sein, die diese Enden umschließen. Auf diese Weise wird eine verschmutzungsfreie Lagerung des Wiegestabes und eine gute Beweglichkeit des Wiegestabes sichergestellt. Die gute Beweglichkeit wird zudem durch Gleitblöcke sichergestellt, so daß eine Reibung des Wiegestabes am Material der Aufnahmetaschen vermieden wird. Beispielsweise können derartige Gleitblöcke aus einem gleitfreudigen, druckbelastbaren Kunststoff beschaffen sein.

Vorteilhaft kann der Raum innerhalb der beiden Aufnahmetaschen so groß bemessen sein, daß anschließend an die beiden Enden des Wiegestabes noch ein Freiraum verbleibt, der zu beiden Seiten eine Beweglichkeit des Wiegestabes ermöglicht. Wahlweise kann der Wiegestab festgesetzt werden, indem an seinen beiden Stirnseiten Elastomerpuffer in diese Freiräume eingesetzt werden. Trotz der nun festgelegten Anordnung des Wiegestabes dämpfen die Elastomerpuffer Lastspitzen, die auf den Wiegestab einwirken, und unterstützen so die Langlebigkeit des Wiegestabes.

Diese Elastomerpuffer können auch dazu genutzt werden, an ein- und demselben Fahrzeug mehrere unterschiedliche Ausgestaltungen von Wägeeinrichtungen zu verwirklichen. So kann beispielsweise vorgesehen sein, den Fahrzeugaufbau an vier unterschiedlichen Auflagepunkten mit Hilfe von Wägeeinrichtungen mit dem Fahrzeugrahmen zu verbinden. Dabei können beispielsweise die beiden vorderen oder die beiden hinteren Auflagepunkte als Festlager ausgestaltet werden, indem dort die Wiegestäbe an jeweils ihren beiden Enden innerhalb der Aufnahmetaschen durch die Elastomerpuffer festgesetzt werden. Die beiden anderen Auflagepunkte können demgegenüber durch Entfernen jeweils beider Elasomerpuffer als Loslager ausgestaltet werden.

Das Druckübertragungsbauteil kann vorteilhaft als Ring ausgestaltet sein, welches den Wiegestab umgibt und welches zugunsten einer einfachen Montage und zugunsten kleiner baulicher Abmessungen als mehrteiliger, beispielsweise zweiteiliger, Ring ausgestaltet sein kann. Bei einem runden Ringquerschnitt kann eine Schwenkbeweglichkeit des Druckübertragungsbauteiles gegenüber dem Wiegestab ermöglicht werden, wodurch die spannungsfreie Krafteinleitung in den Wiegestab unterstützt wird.

Vorteilhaft ist der Wiegestab gegenüber dem Fahrzeug nicht allseitig von einem Elastomerlager umschlossen, da sich bei Belastung des Wiegestabes Gegenkräfte aufbauen, die temperaturabhängig unterschiedlich sein können und dadurch die Meßgenauigkeit der Wägeeinrichtung beeinflussen können. Vorteilhaft kann daher vorgesehen sein, lediglich zwischen dem Wiegestab und einem der beiden Fahrzeugbauteile, also entweder dem Fahrzeugaufbau oder dem Fahrzeugrahmen, ein derartiges Elastomerlager vorzusehen.

Ein Ausführungsbeispiel der Erfindung wird anhand der Zeichnungen im folgenden näher erläutert. Dabei zeigt
- Fig. 1: einen Vertikalschnitt in schematischer Darstellung durch eine Wägevorrichtung,
- Fig. 2: einen ebenfalls schematischen Horizontalschnitt durch die Wägevorrichtung von Fig. 1,
- Fig. 3: einen Schnitt durch ein Druckübertragungsbauteil der Fig. 1 und 2, und
- Fig. 4: ebenfalls in schematischer Darstellung eine Stirnansicht auf die Wägevorrichtung der Fig. 1 und 2.

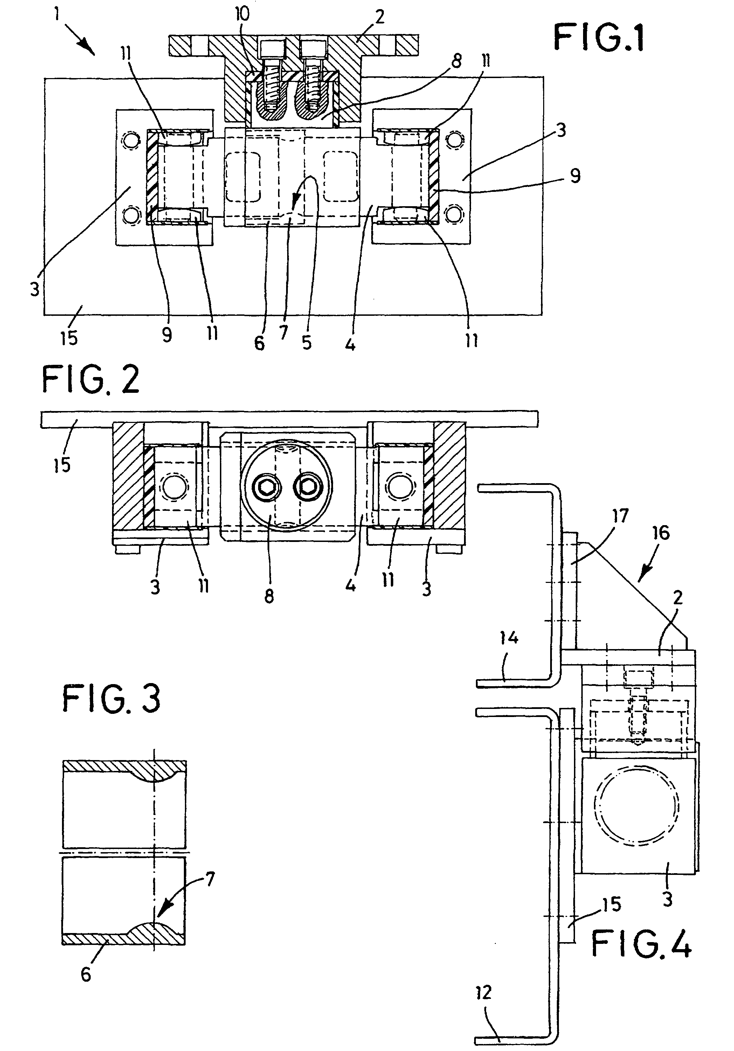

In Fig. 1 ist mit 1 allgemein eine Wägevorrichtung bezeichnet, die über zwei Anschlußstücke mit einem Fahrzeug verbunden werden kann: Ein oberer Druckblock 2 kann beispielsweise am Aufbau des Fahrzeuges befestigt werden und eine Grundplatte 15 mit zwei Aufnahmetaschen 3 kann am Fahrzeugrahmen befestigt werden. Zwischen den Aufnahmetaschen 3 erstreckt sich ein Wiegestab 4, der in der Mitte eine umlaufende Nut 5 aufweist. Ein insbesondere aus Fig. 3 ersichtlicher, zweigeteilter Ring 6 füllt mit einem Vorsprung 7 die Nut 5 konturgleich aus und stellt ein Druckübertragungsbauteil dar, welches den Druck, der vom Druckblock 2 über ein Zwischenstück 8 auf den Ring 6 einwirkt, auf den Wiegestab 4 überträgt.

Der Wiegestab 4 ist durch zwei Elastomerpuffer 9 zwischen den beiden Aufnahmetaschen 3 festgesetzt. Die Elastomerpuffer 9 wirken genauso wie eine im Druckblock 2 angeordnete elastomere Dämpfungsscheibe 10 als Stoßdämpfer, welche die auf den Wiegestab 4 einwirkenden Belastungsspitzen abbauen und Überlastungen der Wiegesensorik vermeiden.

Abweichend von der dargestellten Anordnung kann wahlweise einer oder beide der Elastomerpuffer 9 entfernt werden, um den Wiegestab 4 schwimmend innerhalb der Aufnahmetaschen 3 zu lagern. Relativbewegungen zwischen dem Fahrzeugrahmen und dem Fahrzeugaufbau können auf diese Weise durch eine Beweglichkeit des Wiegestabes 4 aufgefangen werden, ohne daß es zu Verspannungen innerhalb des Wiegestabes 4 und dadurch zu Verfälschungen des Meßergebnisses kommt. Trotz der Beweglichkeit des Wiegestabes 4 ist sichergestellt, daß die Druckeinleitung in den Wiegestab 4 stets an der vorbestimmten Stelle erfolgt, nämlich dadurch, daß das Druckübertragungsbauteil in Form des Ringes 6 ortsfest auf dem Wiegestab 4 fixiert ist. Eine Veränderung des Druckeinleitungsortes am Wiegestab 4 würde zu unterschiedlichen Abständen dieses Druckeinleitungsortes zu den Sensoren innerhalb des Wiegestabes 4 und dadurch evtl. zu unterschiedlichen Meßergebnissen führen.

Die Beweglichkeit des Wiegestabes 4 innerhalb der Aufnahmetaschen 3 wird insbesondere dadurch sichergestellt, daß der Wiegestab innerhalb der Aufnahmetaschen 3 jeweils mit Gleitblöcken 11 versehen ist, so daß eine Haftreibung zwischen dem Wiegestab 4 und den Aufnahmetaschen 3 minimiert ist und ein lediglich minimales Losbrechmoment für eine Beweglichkeit des Wiegestabes 4 erforderlich ist. Die Gleitblöcke 11 sind zum Wiegestab 4 hin gerundet konturiert, so daß je nach den Verwindungen des Fahrzeugrahmens bzw. des Fahrzeugaufbaues Verkantungen oder Schrägstellungen des Wiegestabes 4 innerhalb der Aufnahmetasche 3 möglichst widerstandslos möglich sind und nicht zu Verspannungen des Wiegestabes 4 führen.

Aus Fig. 4 ist ersichtlich, daß die Wägevorrichtung 1 mit wenigen Maßnahmen an einem Fahrzeug angebracht werden kann: Schematisch ist ein Fahrzeugrahmen mit 12 angedeutet und ein Fahrzeugaufbau mit 14. Die Grundplatte 15 ist mit dem Rahmen 12 verschraubt und trägt ihrerseits die Aufnahmetaschen 3 mit dem Wiegestab 4. Ähnlich einfach ist eine Halterung 16 mittels einer Grundplatte 17 an dem Aufbau 14 befestigt. Die Halterung 16 umfaßt den Druckblock 2, so daß die vom Fahrzeugaufbau 14 auf den Rahmen 12 einwirkenden Kräfte über die Wägevorrichtung 1 auf den Rahmen 12 übertragen werden und dabei ermittelt werden können. Eine problemlose, nachträgliche Nachrüstung eines Fahrzeuges mit einer Wägevorrichtung 1 ist durch die problemlose Befestigungsart der Wägevorrichtung 1 am Fahrzeug ermöglicht.

## Patentansprüche

1. Wägeeinrichtung für Fahrzeugaufbauten, mit einem Wiegestab (4), der an seinen beiden Enden mit dem Fahrzeugrahmen oder mit dem Fahrzeugaufbau verbunden ist und dem zwischen seinen beiden Enden ein Druckübertragungsbauteil (6) anliegt, welches mit dem jeweils anderen Fahrzeugbauteil verbunden ist und wobei zwischen dem Wiegestab (4) einerseits und zumindest einem der beiden Fahrzeugbauteile (6) andererseits ein Elastomerlager vorgesehen ist, **dadurch gekennzeichnet, daß** das Druckübertragungsbauteil (6) und der Wiegestab (4) korrespondierende Ausnehmungen und Vorsprünge aufweisen, die das Druckübertragungsbauteil (6) in Längsrichtung des Wiegestabes (4) fixieren, und daß der Wiegestab (4) an seinen beiden Enden in seiner Längsrichtung beweglich gelagert ist.

2. Wägeeinrichtung nach Anspruch 1, **dadurch gekennzeichnet, daß** die beiden Enden des Wiegestabes (4) in jeweils einer Aufnahmetasche (3) angeordnet sind, wobei zwischen dem Wiegestab (4) und den Wandungen der Aufnahmetaschen (3) Gleitblöcke (11) vorgesehen sind.

3. Wägeeinrichtung nach Anspruch 1 oder 2, **gekennzeichnet durch** Elastomerpuffer (9), die entfembar zwischen den Enden des Wiegestabes (4) und den in Längsrichtung des Wiegestabes (4) benachbarten Fahrzeugbauteilen angeordnet sind.

4. Wägeeinrichtung nach einem der vorhergehenden Ansprüche, **dadurch gekennzeichnet, daß** das Druckübertragungsbauteil als mehrteiliger, den Wiegestab (4) umgebender Ring (6) ausgestaltet ist.

5. Wägeeinrichtung nach einem der vorhergehenden Ansprüche, **dadurch gekennzeichnet, daß** nur zwischen dem Wiegestab (4) und einem der Fahrzeugbauteile ein Elastomerlager vorgesehen ist.

## Claims

1. Weighing device for vehicle bodies, with a load cell rod (4) which is connected at its two ends to the vehicle chassis or body and with which between its two ends a pressure transmitting component (6) connected to the other vehicle component part is in contact and on which an elastomer bearing is provided for between the load cell rod (4) on the one hand and the at least one of the both vehicle component parts (6) on the other, **characterised in that** the pressure transmitting component (6) and the load cell rod (4) incorporate corresponding recesses and projections which fix the pressure transmitting component (6) in the longitudinal direction of the load cell rod (4) and **in that** the load cell rod (4) is mounted at its two ends so as to be movable in a longitudinal direction.

2. Weighing device in accordance with claim 1, **characterised in that** each of the two ends of the load cell rod (4) is arranged in a mounting socket (3), where between the load cell rod (4) and the walls of the mounting sockets (3) sliding blocks (11) are provided for.

3. Weighing device in accordance with claim 1 or 2, **characterised by** elastomer buffers (9) detachably arranged between the ends of the load cell rod (4) and the adjacent vehicle component parts in the longitudinal direction of the load cell rod (4).

4. Weighing device in accordance with one of the foregoing claims, **characterised in that** the pressure transmitting component part is designed as a multi-part ring (6) arranged around the load cell rod (4).

5. Weighing device in accordance with one of the foregoing claims, **characterised in that** an elastomer bearing is arranged only between the load cell rod (4) and one of the vehicle component parts.

## Revendications

1. Dispositif de pesage pour carrosseries de véhicules, avec une cellule de charge (4) reliée en ses deux extrémités avec le bâti du véhicule ou avec la carrosserie de ce dernier, et cellule contre laquelle applique, entre ses deux extrémités, un composant transmetteur de pression (6) qui est relié respectivement avec l'autre composant-véhicule, et sachant qu'entre la cellule de charge (4) d'une part et au moins l'un des deux composants-véhicule (6) d'autre part est prévu un palier en élastomère, **caractérisé en ce que** le composant transmetteur de pression (6) et la cellule de charge (4) présentent des évidements et saillies en correspondance mutuelle et qui immobilisent le composant transmetteur de pression (6) dans le sens longitudinal de la cellule de charge (4), et **en ce que** la cellule de charge (4) repose en ses deux extrémités sur des paliers lui permettant de se déplacer dans le sens longitudinal.

2. Dispositif de pesage selon la revendication 1, **caractérisé en ce que** les deux extrémités de la cellule de charge (4) sont agencées chacune dans une poche réceptacle (3), sachant qu'entre la cellule de charge (4) et les parois des poches réceptacles (3) ont été prévus des plots de glissement (11).

3. Dispositif de pesage selon la revendication 1 ou 2, **caractérisé par** des tampons en élastomère (9) amovibles situés entre les extrémités de la cellule de charge (4) et les composants-véhicule voisins situés dans l'axe longitudinal de la cellule de charge (4).

4. Dispositif de pesage selon l'une des revendications précédentes, **caractérisé en ce que** le composant transmetteur de pression se présente sous la forme d'un anneau (6) en plusieurs parties, entourant la cellule de charge (4).

5. Dispositif de pesage selon l'une des revendications précédentes, **caractérisé en ce qu'**un palier en élastomère n'est prévu qu'entre la cellule de charge (4) et l'un des composants-véhicule.
